# FASCICULE DE BREVET EUROPEEN

(11) **EP 1 252 616 B1**
(45) Date de publication et mention de la délivrance du brevet: **07.09.2005**
(21) Numéro de dépôt: 01904039.3
(22) Date de dépôt: 02.02.2001
(51) Int. Cl.: G09F 3/00

(54) **PROCEDE DE LECTURE D'UN MOYEN D' IDENTIFICATION ET MOYEN D'IDENTIFICATION**
VERFAHREN ZUM LESEN EINES IDENTIFIZIERUNGSMITTEL UND IDENTIFIZIERUNGSMITTEL
METHOD FOR READING AN IDENTIFICATION MEANS AND IDENTIFICATION MEANS

(30) Priorité: 04.02.2000 FR 0001403; 13.03.2000 FR 0003148; 09.10.2000 FR 0012860
(43) Date de publication de la demande: 30.10.2002
(73) Titulaire: Societe Novatec S.A., 82000 Montauban (FR)
(72) Inventeur: BOURRIERES, Francis, F-82000 Montauban (FR); KAISER, Clément, F-82000 Montauban (FR)
(86) Numéro de dépôt international: PCT/FR2001/000322
(87) Numéro de publication internationale: WO 2001/057831

(56) Documents cités:
- WO-A-00/10114
- GB-A- 2 304 077
- GB-A- 2 324 065

## Description

La présente invention a trait au domaine de l'identification et de l'authentification d'objets, d'êtres vivants, de transactions et notamment aux adaptations permettant d'optimiser la lecture des moyens d'identification non reproductibles.

### DESCRIPTION DE L'ART ANTÉRIEUR

Tout être, tout bien, toute transaction a besoin d'être associé avec certitude à une identité. Les mêmes êtres, biens et transactions seront ensuite appelés par leur identité d'où la nécessité d'une authentification de cette identification. En effet de tout temps et aujourd'hui plus que jamais, des hommes peu scrupuleux ont le désir de contrefaire soit les produits, soit les identités associées. De même, au niveau des êtres vivants, si ces derniers ne peuvent être contrefaits c'est bien leur identité qui peut être falsifiée ou usurpée en fonction des besoins à satisfaire.

Il existe aujourd'hui une pluralité de moyens d'identification connus pour garantir leur unicité et leur non-reproductibilité. Ainsi, par exemple, le moyen d'identification décrit dans le brevet GB 2 304 077 comprend une pluralité de particules réfléchissantes distribuées en trois dimensions à travers un matériau support, lesdites particules réfléchissent à partir d'une source de lumière une pluralité de rayons à des angles différents de façon à créer une signature de lumière réfléchie unique pouvant faire l'objet d'une acquisition par un moyen de lecture.

Il est vrai que l'arrangement aléatoire en trois dimensions d'hétérogénéités garantit l'unicité et la non reproductibilité du moyen d'identification. Néanmoins, la garantie de ces caractéristiques a pour conséquences une grande complexité d'enregistrement des différentes signatures ainsi que de lecture et de comparaison de ces dernières. Or, un tel moyen d'identification a pour fonction de rendre infalsifiables, de garantir l'authenticité et de sécuriser, les biens et les services. Il apparaît également que la moindre variation dans les positions relatives entre l'éclairage incident, le récepteur et le moyen d'identification, sera suffisante pour générer un signal différent. Par conséquent, il est quasiment impossible de construire deux lecteurs identiques. L'utilisation à grande échelle de ce moyen d'identification et du moyen de lecture envisagé allongeraient considérablement la durée des transactions ce qui ne peut qu'être un frein à son exploitation. De plus, le leurrage est possible avec un tel dispositif, ce qui le rend inopérant. Il suffit en effet de connaître les différentes signatures pour les soumettre sous forme de photocopie au dispositif de lecture.

Le stockage de l'ensemble des signatures lumineuses d'un tel moyen d'identification nécessite un grand nombre d'octets et la comparaison d'une des signatures relevées avec l'ensemble de celles enregistrées pourrait prendre des heures avec les moyens de communication connus à ce jour. Ce moyen de lecture rend le procédé falsifiable car il interprète seulement les images projetées avec un plan, bien que celles-ci proviennent d'un volume.

Un autre moyen d'identification est décrit dans le brevet GB 2 324 065. Ce moyen présente également une géométrie volumique garante de l'unicité et de la non-reproductibilité. Ainsi, le moyen d'identification décrit dans ce document comprend un premier et un second éléments distinguables mutuellement, le second élément étant fixé et distribué aléatoirement à l'intérieur du premier, la position du second élément par rapport au premier formant un code d'identification. Plutôt que traduire la position d'un premier élément par rapport à l'autre en code, il est possible d'utiliser une analyse standard du dessin formé par des hétérogénéités à l'intérieur d'un matériau transparent.

Néanmoins, ce moyen de lecture peut être leurré en ce que l'image analysée pourrait être constituée par une image en deux dimensions, la lecture ne faisant pas intervenir la mise en évidence de la structure en trois dimensions. Ainsi, la troisième dimension ou la géométrie volumique est garante de l'unicité et de la non-reproductibilité mais le moyen de lecture peut être leurré car il ne fait pas intervenir une solution mettant en évidence la nature volumique du moyen d'identification. Or, dans la mesure où la lecture ou le codage serait réalisé sur la totalité du volume le nombre de possibilités aurait les mêmes conséquences que celles déjà relevées sur le moyen décrit plus haut à savoir que la lecture, le stockage et la comparaison deviendraient des opérations d'une durée telle que cette solution d'authentification ne pourrait être réellement exploitée à grande échelle.

La nature volumique d'un moyen d'identification du type de celui comprenant des hétérogénéités distinguables et disposées aléatoirement par rapport à une matière support est garante de l'unicité et de la non-reproductibilité en ce que l'arrangement aléatoire est diffcilement reproductible en trois dimensions. De plus, il n'est pas possible de reproduire un agencement qui est lui-même noyé dans de la matière sans modifier cet agencement.

### DESCRIPTION DE L'INVENTION

Partant de cet état de fait, la demanderesse a mené des recherches sur un procédé optimisé de lecture d'un moyen d'authentification unique et non reproductible donc du type volumique. Ces recherches ont abouti à la conception d'un procédé de lecture d'un moyen d'identification tel que défini dans la revendication 1.

Selon l'invention, le procédé de lecture d'un moyen d'identification unique et non reproductible du type de celui comprenant un mélange d'au moins deux matériaux distinguables l'un de l'autre et comprenant une matrice transparente, est remarquable en ce qu'il consiste d'une part à reconnaître la structure hétérogène interne en deux dimensions dudit moyen d'identification et d'autre part à mettre en évidence et à prouver sa troisième dimension.

Cette caractéristique est particulièrement avantageuse en ce qu'elle décompose le procédé de lecture en deux opérations, ce qui simplifie grandement la lecture et l'acquisition tout en garantissant l'authenticité.

Il est effet reconnu que la troisième dimension est garante de l'unicité et de la non-reproductibilité du moyen d'identification qui est soumis à la lecture lorsque ce dernier contient des hétérogénéités. De même, il est connu que l'arrangement aléatoire d'une matière par rapport à une autre, les deux matières étant distinguables l'une de l'autre constitue un code. Aussi, la demanderesse a avantageusement imaginé un procédé de lecture consistant à enregistrer et à réaliser la lecture en deux dimensions du moyen d'identification et à s'assurer de la nature volumique sans leurre possible dudit moyen d'identification lors de ces opérations. Ainsi, il n'est plus utile de stocker l'ensemble des signatures lumineuses ou autre d'un moyen d'identification comme le nécessitaient les procédés de lecture de l'art antérieur, ensemble de signatures qui attestait de la nature volumique du moyen d'identification sans toutefois éviter le leurre. La seule représentation en deux dimensions, donnée par la soumission à un premier éclairage diffus, suffit à la reconnaissance du moyen d'identification et à son codage, son stockage devient alors moins problématique et la comparaison des images devient une opération particulièrement rapide cette opération étant immédiatement suivie, sans bouger le moyen d'identification, à un éclairage ponctuel générant une ombre et attestant ainsi de son authenticité.

L'invention de fournit également un moyen d'identification adapté et optimisé pour ce procédé de lecture, ce moyen étant défini dans la revendication 3.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés.

### BRÈVE DESCRIPTION DES DESSINS

La figure 1 est un dessin schématique en vue de dessus d'une pluralité de moyens d'identification soumis au procédé de lecture de l'invention,
les figures 2a et 2b sont des photographies de moyen d'identification en vue de dessus illustrant les résultats du procédé de l'invention,
les figures 3a et 3b sont des dessins schématiques du dispositif de mise en oeuvre des deux opérations constituant le procédé de l'invention avec un éclairage par le dessous et acquisition par le dessus.
Les figures 4a et 4b sont des dessins schématiques du dispositif de mise en oeuvre des deux opérations constituant le procédé de l'invention avec éclairage et acquisition d'un même côté.

### DESCRIPTION DES MODES DE RÉALISATION PRÉFÉRÉS

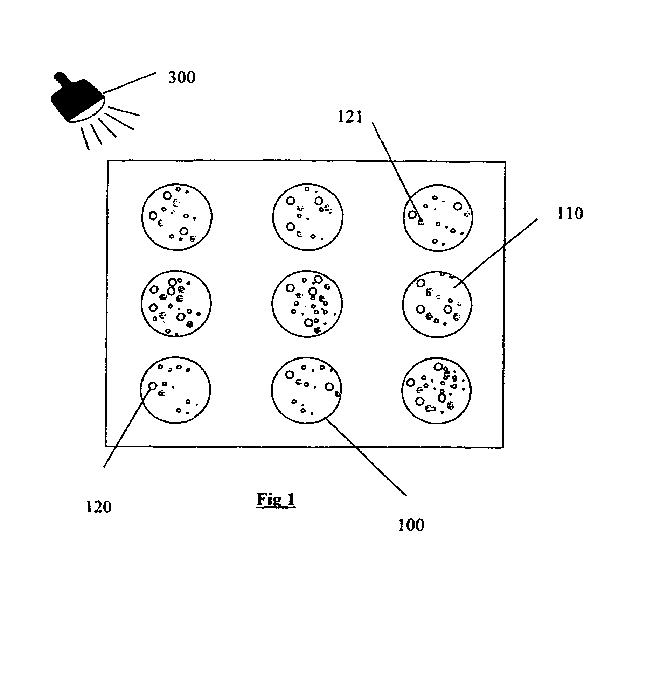

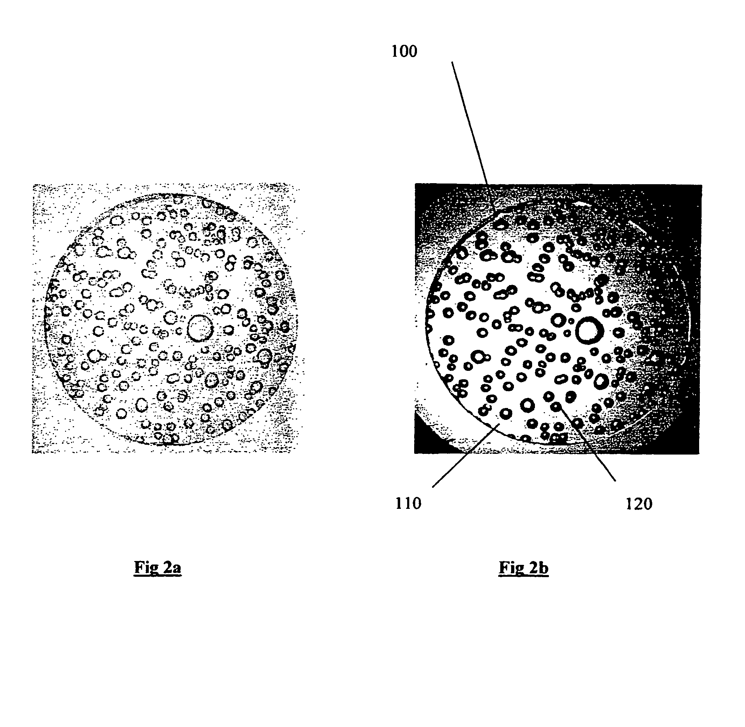

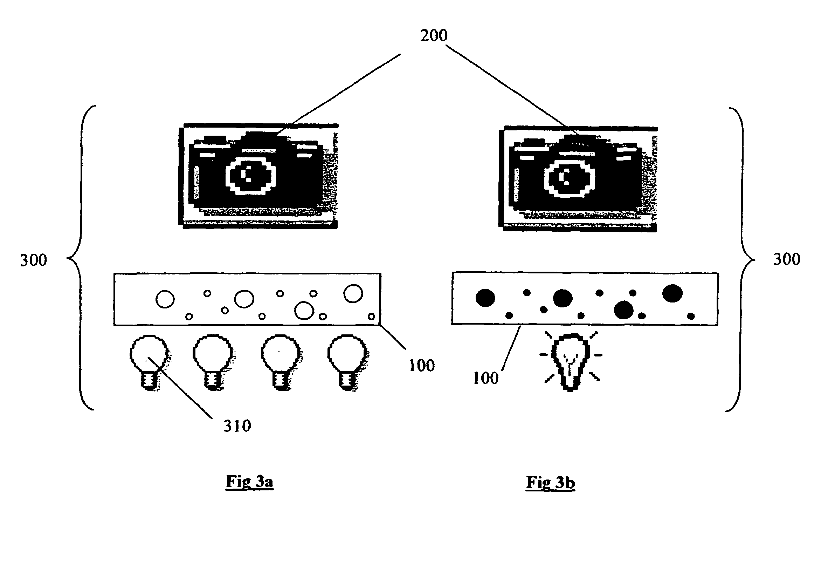

Tel qu'illustré sur les dessins des figures 1, 2a et 2b, le moyen d'identification unique et non reproductible référencé 100 dans son ensemble est du type de celui comprenant un mélange durcissable transparent 110 et une pluralité de bulles 120. Comme illustré sur les dessins des figures 3a et 3b, le moyen d'identification comporte une épaisseur et donc une troisième dimension garante de son unicité et de son authenticité.

Selon l'invention, le procédé de lecture consiste d'une part à reconnaître la structure hétérogène interne en deux dimensions dudit moyen d'identification et d'autre part à mettre en évidence sa troisième dimension. Selon un premier mode de réalisation illustré en figure 1, le procédé est remarquable en ce qu'il consiste à mettre en évidence la disposition volumique de l'agencement des matériaux 120 contenus dans le moyen d'identification par analyse des ombres 121 générées par lesdits matériaux 110 et 120 en fonction de l'angle d'incidence d'un éclairage 300 par rapport audit moyen d'identification 100. Cette solution est remarquable en ce qu'elle propose une mise en évidence de la structure volumique particulièrement simple. Ainsi, dans le cadre d'une application basée sur des moyens d'identification contenant des bulles, la seule présence d'ombres en dessous des bulles ou dans l'axe qu'elles forment avec la source lumineuse, garantit que les bulles sont disposées en trois dimensions. Cette information associée à la reconnaissance en deux dimensions du moyen d'identification autorise la mise en place d'un procédé de lecture non leurrable et particulièrement rapide.

Dans le cas spécifique et préféré de bulles, la demanderesse a en outre imaginé une autre caractéristique particulièrement avantageuse du procédé qui est remarquable en ce qu'il consiste à lire et à mettre en évidence la disposition volumique de l'agencement des bulles contenues dans le moyen d'identification par soumission successive et sans délai dudit moyen d'identification à un éclairage diffus permettant d'obtenir une projection selon deux dimensions des contours des bulles autorisant sa lecture et son codage, puis à un éclairage ponctuel générant une réflexion à l'interface qui sépare l'hétérogénéité du produit transparent permettant ainsi de prouver son aspect volumique et donc son authenticité. Ces deux éclairages successifs se font automatiquement dans un temps très court dans une position fixe du moyen d'identification de façon à rendre impossible toute manipulation consistant à leurrer le lecteur en lui soumettant par exemple un dessin des ombres à deux dimensions immédiatement après la première acquisition. Cette caractéristique est illustrée sur les figures 3a et 3b où le moyen d'identification 100 est soumis à un éclairage diffus en figure 3a puis à éclairage ponctuel illustré en figure 3b, les moyens d'identification faisant l'objet d'une acquisition pour lecture ou enregistrement au moyen d'un dispositif d'acquisition quelconque 200, défini ici par un appareil photographique numérique.

Les résultats de cette soumission successive d'éclairages différents apparaissent sur les figures 2a et 2b dans lesquelles il est aisé de constater la mise en évidence de la structure volumique d'un moyen d'identification du type comprenant des bulles 120 par la réflexion différente qu'elles proposent en fonction de l'éclairage différent. En effet, du fait de leur structure translucide, les bulles autorisent un éclairage axial qu'il soit diffus ou ponctuel ce qui simplifie encore le procédé de lecture et sa mise en oeuvre. Le moyen d'acquisition n'a qu'à comparer localement les deux images pour constater que ce sont les mêmes bulles 120 qui produisent une réflexion différente. Ainsi, selon une autre caractéristique particulièrement avantageuse de l'invention, le procédé est remarquable en ce qu'il consiste à mettre en évidence la disposition volumique du moyen d'identification par analyse des formes réfléchies par les bulles 120 contenues dans les moyens d'identification en fonction de l'éclairage. L'application du procédé de lecture de l'invention à un moyen d'identification comprenant des bulles constitue bien une nouveauté par rapport à l'art antérieur en ce que ce n'est pas la source lumineuse qui change mais bien la nature de cette dernière pour apporter une information donnée et non une nouvelle signature lumineuse, ce qui se différencie de l'art antérieur dont la variation des flux lumineux avait pour but l'acquisition de nouvelles signatures lumineuses à des fins de prouver la nature volumique du moyen d'identification et de reconnaître ce dernier qui de plus peut très bien être un leurre car il n'y a aucune notion de temps entre deux acquisitions successives.

Dans le même temps ou du moins successivement, une des deux images en deux dimensions du moyen d'identification fait l'objet d'une comparaison à partir de celles enregistrées lors de sa fabrication. Cette comparaison sera également réalisée au niveau local, c'est à dire par le lecteur ou le microprocesseur qui pourra lui être associé. Une fois le moyen d'identification reconnu, la transaction (dans le cadre d'une application du type transaction) peut être réalisée. Dans un tel cas, le codage du moyen d'identification pourra être contenu dans la partie secrète d'une puce électronique qui est associée au dit moyen d'identification.

Bien entendu dans la mesure où l'image en deux dimensions serait reconnue alors que la troisième dimension du moyen d'identification 100 ne serait pas démontrée, la transaction ne serait pas autorisée et le moyen d'identification pourrait faire l'objet d'une saisie. Il en est de même avec l'image en deux dimensions qui serait différente de celle enregistrée.

Afin d'encore accélérer le procédé de lecture, le moyen d'identification 100 pourra présenter un code d'appel lisible par le moyen d'acquisition qui sera alors fourni lors de la demande d'authentification ou un code secret permettant d'accéder à une base de données locale ou à distance.

Les dessins des figures 3a et 3b, illustrent également un mode de réalisation particulièrement avantageux d'un dispositif référencé 300, permettant de mettre en oeuvre le procédé. Ce dispositif 300 est remarquable en ce qu'il est constitué par une rampe de moyens d'éclairage 310 ici des ampoules, passant d'un état où tous les moyens sont allumés afin de créer un éclairage diffus sur le moyen d'identification 100 à un état où un seul moyen est allumé afin de réaliser un éclairage ponctuel sur le moyen d'identification 100. Ce mode de réalisation a pour avantage de proposer une solution d'éclairage différent sur la base d'un dispositif 300 très simple et facile à mettre en oeuvre.

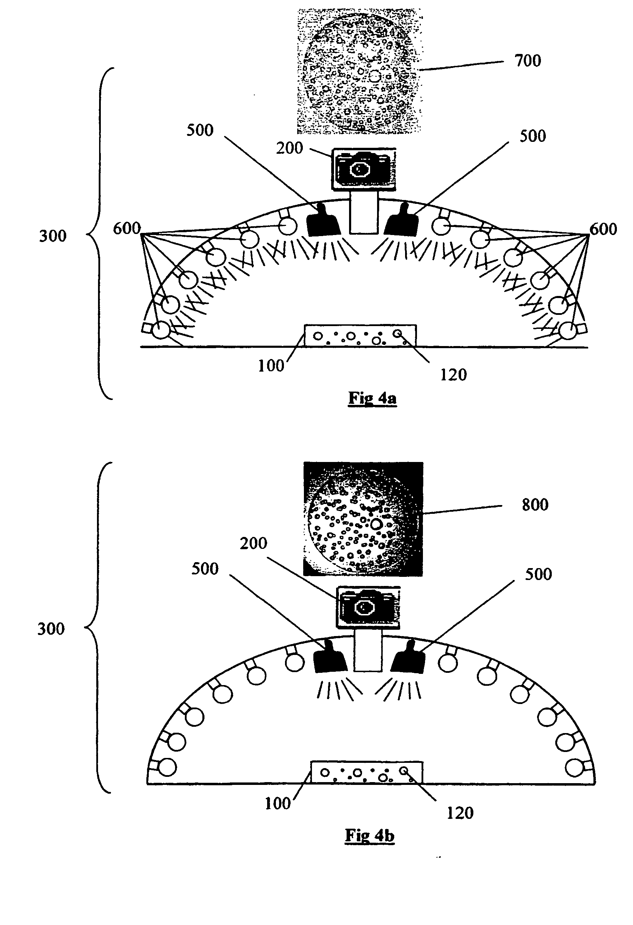

Les dessins des figures 4a et 4b, illustrent un autre mode de réalisation où le moyen d'identification 100 est décodé et authentifié par lecture et éclairages successifs d'un même côté. En 4a, les lampes 600 et 500 placées à la périphérie d'une coupole s'éclairent ensemble fournissant ainsi l'éclairage diffus permettant de délimiter les contours des éléments de codage, le moyen d'acquisition 200 peut opérer, sous cet éclairage le moyen d'acquisition 200 fournit une image aux contours bien définis tel que représentée réellement en 700 ; s'ensuit immédiatement et sans délai l'éclairage tel que représenté en 4b où les lampes 600 sont éteintes et les lampes 500 fournissant un éclairage ponctuel sont allumées de façon à générer l'ombre des éléments de codage attestant ainsi l'authenticité dudit moyen d'identification, sous cet éclairage le moyen d'acquisition 200 fournit une image avec projection des ombres à l'interface des bulles tel que représentée réellement en 800.

Un autre objet de l'invention est constitué par un moyen d'identification adapté au procédé de l'invention. Ainsi, la demanderesse a imaginé un moyen d'identification à bulles 100 qui ne résulterait pas d'un mélange particulier afin de s'assurer de la non-reproductibilité d'un tel moyen d'identification à partir de l'instant où le mélange de matériaux pourrait être réalisé à l'identique. Ainsi, le moyen d'identification imaginé par la demanderesse est remarquable en ce qu'il est constitué par une matière transparente dont les bulles ont été auto-générées par traitement thermique lors du durcissement de ladite matière transparente. Aussi, le moyen d'identification ne résulte plus d'un mélange mais d'une auto-génération qui ne peut pas être contrôlée et à fortiori reproduite.

On comprend que le procédé de lecture d'un moyen d'identification, le dispositif permettant de le mettre en oeuvre et le moyen d'identification adapté et optimisé pour ce procédé, qui viennent d'être ci-dessus décrits et représentés, l'ont été en vue d'une divulgation plutôt que d'une limitation. Les applications industrielles sont nombreuses et à titre d'exemples non limitatifs, il peut être cité :
- la lutte contre les contrefaçons sous toutes formes (produits de luxe, objets d'art, antiquités, ...),
- l'identification certaine d'individus porteurs de cartes d'identité, passeports, permis de conduire ou tout autre document officiel,
- l'identification certaine de transactions telles que celles effectuées par cartes à puce, magnétiques et billets de banque,
- traçabilité certaine des produits alimentaires et de tous objets de la naissance à la destruction,
- identification certaine des animaux protégés pour la consommation humaine et de campagne,
- contrôle d'accès de zones domestiques, de lieux publics, de zones protégées sensibles.

## Revendications

1. Procédé de lecture d'un moyen d'identification (100) volumique unique et non reproductible du type de celui comprenant un mélange d'au moins deux matériaux (110 et 120) distinguables l'un de l'autre (110 et 120), le procédé consistant
d'une part à reconnaître la structure hétérogène interne en deux dimensions dudit moyen d'identification (100) et d'autre part à mettre en évidence et à prouver sa troisième dimension , **CARACTÉRISÉ EN CE QU**'il consiste à lire et à mettre en évidence la disposition volumique de l'agencement des bulles (120) contenues dans le moyen d'identification (100) par soumission successive et sans délai dudit moyen d'identification (100) à un éclairage diffus permettant d'obtenir une projection (700) selon deux dimensions des contours des bulles (120) permettant ainsi de le lire et de le coder, puis à un éclairage ponctuel générant une réflexion à l'interface (800) qui sépare l'hétérogénéité du produit transparent (110) permettant ainsi de prouver son aspect volumique, le moyen d'indentification étant constitué d'une matrice en matière transparente dans laquelle sont noyées des bulles qui ont été générées par traitement thermique lors du durcissement de la matrice.

2. Procédé selon la revendication 1, **CARACTÉRISÉ EN CE QU**'il consiste à mettre en évidence la disposition volumique (800) du moyen d'identification (100) par analyse des formes réfléchies par les bulles (120) contenues dans les moyens d'identification (100) en fonction de l'éclairage.

3. Moyen d'identification (100) constitué par une matière transparente et adapté au procédé selon la revendication 1, **CARACTÉRISÉ EN CE QUE** la matière transparente (110) contient des bulles (120) qui ont été auto-générées par traitement thermique lors du durcissement de ladite matière transparente (110).

## Patentansprüche

1. Verfahren zum Lesen eines Mittels zur einmaligen und nicht reproduzierbaren volumenbezogenen Identifizierung seines Typs, wobei das Mittel ein Gemisch aus wenigstens zwei voneinander unterscheidbaren Materialien (110 und 120) umfasst, wobei das Verfahren umfasst:
einerseits Erkennen der inneren heterogenen Struktur des Mittels zur Identifizierung (100) in zwei Dimensionen und andererseits Sichtbarmachen und Beweisen seiner dritten Dimension, **dadurch gekennzeichnet , dass** es umfasst:
Lesen und Sichtbarmachen der volumenbezogenen Anordnung der Verteilung von Blasen (120), die in dem Mittel zur Identifizierung (100) enthalten sind, durch sukzessives und unverzügliches Unterwerfen des Mittels zur Identifizierung (100) einer diffusen Beleuchtung, die es ermöglicht, eine zweidimensionale Projektion (700) der Konturen der Blasen (120) zu erhalten, was es möglich macht, es zu lesen und zu codieren, und danach einer punktuellen Beleuchtung, die einer Reflektion an der Grenzfläche (800), die die Heterogenität des transparenten Produktes (110) auftrennt, zu erzeugen, was es ermöglicht, seinen volumenbezogenen Aspekt zu beweisen, wobei das Mittel zur Identifizierung aus einer Matrix aus transparentem Material, in die Blasen eingelassen sind, die sich durch eine thermische Behandlung während des Härtens der Matrix gebildet haben, besteht.

2. Verfahren nach Anspruch 1, **dadurch gekennzeichnet, dass** es darin besteht, die volumenbezogene Anordnung (800) des Mittels zur Identifizierung (100) durch Analyse der Formen, die durch die in den Mitteln zur Identifizierung enthaltenen Blasen (120) als Funktion der Beleuchtung reflektiert werden, sichtbar zu machen.

3. Mittel zur Identifizierung (100), das aus einem transparenten Material besteht und an das Verfahren nach Anspruch 1 angepasst ist, **dadurch gekennzeichnet, dass** das transparente Material (110) Blasen (120) enthält, die sich durch thermische Behandlung während des Härtens des transparenten Materials (110) gebildet haben.

## Claims

1. Reading process for a three-dimensional means of identification (100) that is unique and non-reproducible containing a mixture of at least two materials (110 and 120) that can be distinguished from one another (110 and 120), the process consisting. Of one part to recognize the heterogeneous internal structure in two dimensions of said means of identification (100) and another part to verify and prove its third dimension, **CHARACTERIZED BY** reading and verifying the three-dimensional layout of the bubbles (120) contained in the means of identification (100) by submitting said means of identification (100) successively and without delay to a diffuse lighting resulting in a two-dimensional projection (700) of the contours of the bubbles (120), thereby allowing them to be read and coded, then to a point source lighting generating a reflection on the interface (800) separating the heterogeneity from the transparent product (110), thereby proving its three-dimensional aspect, the means of identification being constituted by a matrix of transparent material in which bubbles have been generated by treatment with heat during the hardening of the matrix.

2. Process according to claim 1, **CHARACTERIZED BY** verifying the three-dimensional layout (800) of the means of identification (100) by analyzing the reflected shapes of the bubbles (120) contained in the means of identification (100) caused by lighting.

3. Means of identification (100) constituted by a transparent material and adapted to the process according to claim 1, **CHARACTERIZED BY** THE FACT THAT the transparent material (110) contains bubbles (120) which have been self-generated by treatment with heat during the hardening of said transparent material (110)
